# EUROPEAN PATENT APPLICATION

(11) **EP 3 876 552 A1**
(43) Date of publication of application: **08.09.2021**
(21) Application number: 18938420.9
(22) Date of filing: 09.11.2018
(51) Int. Cl.: H04R 1/10, B60R 16/037

(54) **MIC SWITCHING APPARATUS AND METHOD FOR VEHICLE**

(30) Priority: 30.10.2018 CN 201811277346
(71) Applicant: Beijing X.Y. Link Technology Co., Ltd., Beijing 100089 (CN)
(72) Inventor: LI, Yuxuan, Beijing 100089 (CN)
(74) Representative: Delorme, Nicolas
(86) International application number: PCT/CN2018/114776
(87) International publication number: WO 2020/087563

(57) **Abstract**

Provided are an MIC switching apparatus and an MIC switching method for a vehicle, which can achieve automatic switching between a headset MIC and an on-board device MIC. The MIC switching apparatus includes: a wireless headset MIC (14), a connector (12), an on-board device MIC (24), a data selector (13), and a controller (11). The connector (11) is configured to, when receiving a connection signal, control the data selector (13) to receive a sound signal from the on-board device MIC (24), and when not receiving the connection signal, control the data selector (13) to receive a sound signal from the wireless headset MIC (14). With the above features, automatic switching from sound acquisition by the on-board device MIC to sound acquisition by the wireless headset MIC may be achieved, thereby improving user experiences and increasing market competitiveness of the vehicle applying the method.

## Description

### TECHNICAL FIELD

The present application relates to the field of vehicles, in particular to an MIC switching apparatus and an MIC switching method for a vehicle.

### BACKGROUND

With the rise of the Internet of Vehicles, most functions in vehicles can be controlled by voice, including: air conditioning settings, navigation settings, and the like. Moreover, in an environment where an on-board device, a Bluetooth headset, and a mobile phone terminal are interconnected, when the Bluetooth headset is picked up and worn, automatic switching from sound acquisition by an on-board device MIC to sound acquisition by a headset MIC cannot be achieved by the related art.

In some special vehicles, such as large trucks, for some reasons, sound insulation effects of the vehicles are poor. As a result, when voice control is issued in these vehicles, far-field noise reduction effects based on the on-board device MICs are poor due to loud noises in the vehicles, thereby resulting in inaccurate recognition of voice commands, which further causes failure of the voice control.

The information disclosed in the Background section of the present application is only intended to deepen the understanding of the general background of the present application, and should not be regarded as a recognition or any form of implication that the information constitutes the related art already known to those skilled in the art.

### SUMMARY

The present application is intended to provide an MIC switching apparatus and an MIC switching method which can achieve automatic switching between a headset MIC and an on-board device MIC.

To solve the above problem, the present application relates to an MIC switching apparatus for a vehicle, including: a wireless headset MIC configured to receive sounds; a connector configured to generate a connection signal when a wireless headset and an on-board device are connected; an on-board device MIC configured to receive sounds and capable of being connected to the connector; a data selector respectively connected to the wireless headset MIC and the connector and configured to selectively receive a sound signal from the wireless headset MIC or the on-board device MIC; and a controller respectively connected to the connector and the data selector, and configured to, when receiving the connection signal, control the data selector to receive the sound signal from the on-board device MIC, and when not receiving the connection signal, control the data selector to receive the sound signal from the wireless headset MIC.

Further, the connector includes at least one PIN. When the at least one PIN is connected to the on-board device, the connector generates the connection signal.

Further, the MIC switching apparatus may also include: a range sensor configured to detect a distance between the wireless headset and the on-board device, and send an approach signal to the connector to allow the connector to generate the connection signal when the distance is less than a distance threshold.

Further, the MIC switching apparatus may also include: an optical sensor configured to detect whether the wireless headset is worn or not, and send a wearing signal to the controller when the wireless headset is worn.

The controller is further configured to control, when receiving the wearing signal but not receiving the connection signal, the data selector to receive the sound signal from the wireless headset MIC.

Further, the MIC switching apparatus may also include: a near-field noise reduction module configured to perform near-field noise reduction on sounds received by the wireless headset MIC; and a far-field noise reduction module configured to perform far-field noise reduction on sounds received by the on-board device MIC.

Further, the wireless headset may include a Bluetooth headset; the wireless headset MIC, the connector, the data selector, and the controller are arranged in the Bluetooth headset.

Furthermore, the on-board device may include: a Bluetooth module configured for Bluetooth communication connection with the Bluetooth headset.

Further, the on-board device may include a vehicle center console, a vehicle central instrument, a vehicle steering wheel, a vehicle driving computer, and/or a vehicle driving recorder.

The present application further relates to an MIC switching method for a vehicle. The method can be applied to a wireless headset and/or an on-board device. The wireless headset includes a wireless headset MIC configured to receive sounds, a connector configured to generate a connection signal when the wireless headset and the on-board device are connected, and a data selector respectively connected to the wireless headset MIC and the connector. The on-board device includes: an on-board device MIC configured to receive sounds. The method includes: responding to the connection signal; when receiving the connection signal, controlling the data selector to receive a sound signal from the on-board device MIC; and when not receiving the connection signal, controlling the data selector to receive a sound signal from the wireless headset MIC.

Further, in the step of controlling the data selector to receive the sound signal from the wireless headset MIC, when it is detected that the wireless headset is not worn and the connection signal is not received, by the method, the data selector may be controlled to receive the sound signal from the wireless headset MIC.

The present application has the beneficial effects: in an environment where the on-board device and the wireless headset are interconnected, automatic switching from sound acquisition by the on-board device MIC to sound acquisition by the wireless headset MIC can be achieved when the wireless headset is picked up and worn and the wireless headset and the on-board device are interconnected, thereby improving user experiences and increasing market competitiveness of the vehicle which is equipped with the apparatus of the present application or applying the method of the present application.

### BRIEF DESCRIPTION OF THE DRAWINGS

The accompanying drawings constituting a part of the present application are used to provide a further understanding of this application, so that other features, objectives, and advantages of this application become more apparent. The illustrative drawings and descriptions thereof in the embodiments of the present application are intended to explain this application, and do not constitute an improper limitation on this application. In the drawings:
FIG. 1 is a block diagram of an MIC switching apparatus for a vehicle according a first implementation mode of the present application;
FIG. 2 is a block diagram of an MIC switching apparatus for a vehicle according to a second implementation mode of the present application;
FIG. 3 is a schematic circuit diagram of a data selector according to the present application; and
FIG. 4 is a flowchart of an MIC switching method for a vehicle according to the present application.

### DETAILED DESCRIPTION OF THE EMBODIMENTS

In order to make the solutions of the present application better understood by those skilled in the art, the technical solutions in the embodiments of the present application will be clearly and completely described below in combination with the drawings in the embodiments of the present application. It is apparent that the described embodiments are not all embodiments but part of embodiments of the present application. All other embodiments obtained by those of ordinary skilled in the art on the basis of the embodiments in the present application without creative work shall fall within the scope of protection of the present application.

In addition, terms "mount", "set", "provided with", "connect", "configure to" and the like should be broadly understood. For example, the terms may refer to fixed connection, detachable connection, or integration. The terms may refer to mechanical connection or electrical connection. The terms may also refer to direct connection, or indirect connection through a medium, or communication in two devices, or elements or components. Those of ordinary skill in the art can understand specific implications of the above terms in the present application according to specific situations.

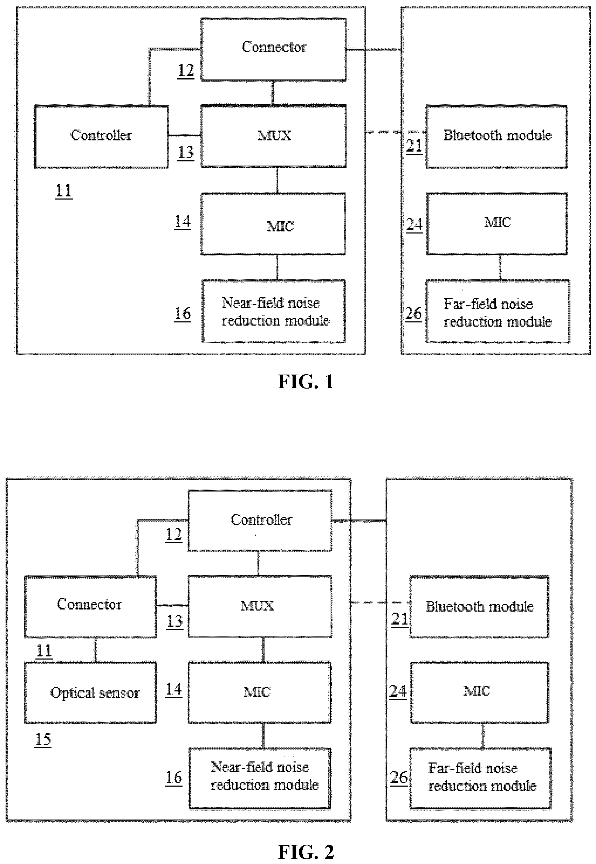

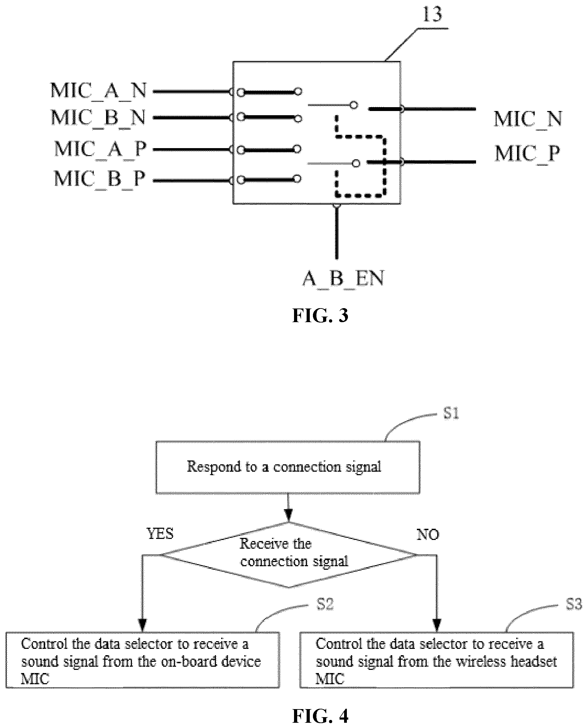

It is to be noted that the embodiments in the present application and the features in the embodiments may be combined under the condition of no conflicts. The present application is described below with reference to the drawings and in conjunction with the embodiments in detail. FIG. 1 is a block diagram of an MIC switching apparatus for a vehicle according a first implementation mode of the present application. FIG. 2 is a block diagram of an MIC switching apparatus for a vehicle according to a second implementation mode of the present application. FIG. 3 is a schematic circuit diagram of a data selector according to the present application. FIG. 4 is a flowchart of an MIC switching method for a vehicle according to the present application.

As shown in FIG. 1, the MIC switching apparatus for a vehicle according to the present application includes: a controller 11, a connector 12, a data selector (MUX) 13, and a wireless headset microphone (MIC) 14 that are arranged in a wireless headset 1, and an on-board device MIC 24 that is arranged in an on-board device 2.

The wireless headset MIC 14 is arranged inside the wireless headset 1 to receive user's sounds and converts the same into a sound signal.

The connector 12 is arranged inside the wireless headset 1, respectively electrically connected to the data selector 13 and the controller 12, and further can be electrically connected to the on-board device 12. The connector 12 detects whether the wireless headset 1 and the on-board device 12 are connected or not, generates a connection signal when the wireless headset 1 and the on-board device 2 are connected, and further sends the connection signal to the controller 11.

Specifically, the present application can implement the above technical solutions in two modes.

The first solution includes that the connector may include at least one PIN (not shown in the figure); when the at least one PIN is in contact with a contact point of the on-board device, it indicates that the wireless headset 1 and the on-board device 2 are connected; and the connector generates the connection signal (for example, a voltage signal) and sends the signal to the controller 1. In this solution, the existing PIN of the connector is used to determine whether it is connected, thereby achieving a reliable detection result and simplifying the structure.

The second solution includes that a range sensor (not shown in the figure) is arranged in the wireless headset 1 or the on-board device 2; the range sensor is configured to detect a distance between the wireless headset 1 and the on-board device 2; when the distance is less than or equal to a preset distance threshold, for example, the distance threshold may be 0, it indicates that the wireless headset 1 and the on-board device 2 are connected; the range sensor sends an approach signal (for example, a voltage signal) to the connector; and the connector generates the connection signal after receiving the approach signal. With the solution, the PIN of the connector may not be occupied, the signal is reliable and not easy to be interfered, and thus reliability of the MIC switching apparatus according to the present application is improved.

The on-board device MIC is arranged inside the on-board device 2 to receive user's sounds and convert the same into a sound signal. In addition, on a condition that the on-board device 2 and the wireless headset 1 are connected, the on-board device MIC and the connector are electrically connected, so that the user's sounds are received by the on-board device MIC, and input to the on-board device or other device through the data selector 13, so as to be processed and used.

The data selector 13 is respectively connected to the wireless headset MIC and the connector, and configured to selectively receive a sound signal from the wireless headset MIC or the on-board device MIC, and output a channel of sound signal.

Specifically, as shown in FIG. 1 and FIG. 3, the data selector 13 may be a data selector with two-channel input and one-channel output, namely an alternative data selector. First input terminals MIC_A_N and MIC_B_N of the data selector are connected to the wireless headset MIC 14 to receive a voice signal from the wireless headset MIC 14. Second input terminals MIC_A_P and MIC_B_P of the data selector are connected to the connector 12, so that a voice signal from the on-board device MIC 24 may be received through the connector 2 when the wireless headset 1 and the on-board device 2 are connected. A control terminal A_B_EN of the data selector is connected to the controller 11 to receive a controller signal of the controller 11, so that the first input terminals or the second input terminals are selectively connected to data output terminals MIC_N and MIC_P.

Referring back to FIG. 1, the controller 11 is arranged inside the wireless headset 1, and respectively connected to the connector 12 and the data selector 13.

The controller 11 is configured to, when receiving the connection signal, control the data selector to receive the sound signal from the on-board device MIC. That is, when the on-board device 2 and the wireless headset 1 are connected, the connector 12 sends a connection signal (for example, a voltage signal) to the controller 11, the controller 11 sends a control signal (for example, a high level or a low level) to the data selector 13 after receiving the connection signal, so that the second input terminals of the data selector are connected to the connector 12. Since the connector 12 is connected to the on-board device MIC 24 in the on-board device 2, the data selector receives the sound signal from the on-board device MIC, while the wireless headset MIC does not receive the sound signal.

The controller 11 is further configured to, when not receiving the connection signal, control the data selector to receive the sound signal from the wireless headset MIC. That is, when the on-board device 2 and the wireless headset 1 are not connected, the controller 11 sends a control signal (for example, a high level or a low level) to the data selector 13 in the case of not receiving the connection signal, so that the first input terminals of the data selector are connected to the wireless headset MIC 14, the data selector receives the sound signal from the on-board device MIC 14, while the on-board device MIC does not receive the sound signal.

As shown in FIG. 2, according to the second implementation mode of the present application, in order to accurately detect whether the wireless headset 1 is worn or not, the wireless headset 1 further includes an optical sensor 15. When the wireless headset gets close to the human body, for example, very close to the ear, the optical sensor may send a wearing signal (for example, a voltage signal) that indicates that the headset is worn to the controller, so that whether the wireless headset is worn can be detected. The optical sensor has many advantages in use, for example, non-contact and non-destructive measurement, almost no interference, high-speed transmission, and telemetry and remote control.

According to the second implantation mode of the present application, the controller may be further configured to, when receiving the wearing signal but not receiving the connection signal, control the data selector to receive the sound signal from the wireless headset MIC. That is, in the case that the on-board device 2 and the wireless headset 1 are not connected and the headset is worn, the controller 11 sends a control signal (for example, a low level or a high level) to the data selector 13, and the first input terminals of the data selector are allowed to be connected to the wireless headset MIC 14, so that the data selector receives the sound signal from the wireless headset MIC 14, while the on-board device MIC does not receive the sound signal.

Further, as shown in FIG 1 and FIG. 2, the wireless headset 1 also includes a near-field noise reduction module 16 configured to perform near-field noise reduction on sounds received by the wireless headset MIC, so that the wireless headset MIC may acquire the sound signal more accurately.

In addition, the on-board device 2 further includes a far-field noise reduction module 26 configured to perform far-field noise reduction on sounds received by the on-board device MIC, so that the on-board device MIC may acquire the content of sounds more accurately.

Near-field noise reduction of the near-field noise reduction module and far-field noise reduction of the far-field noise reduction module described above are both existing noise reduction methods in the related fields, which will not be described here in detail in this application.

Further, the wireless headset 1 may be a Bluetooth headset, the on-board device 2 may be in communication connection with an on-board controller (for example, an ECU or an MCU), and performs information interaction with the on-board controller. The on-board device 2 includes but is not limited to a vehicle center console, a vehicle central instrument, a vehicle steering wheel, a vehicle driving computer, and/or a vehicle driving recorder. In addition, the on-board device has a controller and can run the foregoing operating system such as Android, IOS or Windows. In addition, the on-board device 2 includes: a Bluetooth module 21; the Bluetooth module 21 is in communication connection with the Bluetooth connection (shown by the dotted line in the figure) to send data to or receive data from the Bluetooth headset in a wireless connection form.

In addition, as shown in Fig 4, the present application further relates to an MIC switching method for a vehicle. The method can be applied to the wireless headset and/or on-board device described above. The method includes the steps from S1 to S3.

At S1, a connection signal that is generated by a data selector when the wireless headset and the on-board device are connected is responded.

When the connection signal is received, S2 is performed, that is, the data selector is controlled to receive a sound signal from the on-board device MIC.

When the connection signal is not received, S3 is performed, that is, the data selector is controlled to receive a sound signal from the wireless headset MIC.

Further, before S3 is performed, when the wireless headset is not worn as detected and the connection signal is not received, S3 is required to be performed, that is, the data selector is controlled to receive the sound signal from the wireless headset MIC.

It is apparent that those skilled in the art should know that each module or step of the embodiment of the disclosure can be implemented by a universal computing device, and the modules or steps can be concentrated on a single computing device or distributed on a network formed by a plurality of computing devices, and can optionally be implemented by programmable codes executable for the computing devices, so that the modules or steps can be stored in a storage device for execution with the computing devices, or can form each integrated circuit module, or multiple modules or steps therein can form a single integrated circuit module for implementation. As a consequence, the disclosure is not limited to any specific hardware and software combination.

In addition, the present application further relates to a computer device, including a memory, a processor, and a computer program that is stored on the memory and can be run on the processor. When executing the computer program, the processor can implement the foregoing MIC switching method for the vehicle. In addition, the present application further relates to a computer-readable storage medium. The computer-readable storage medium stores the computer program performing the foregoing MIC switching method for the vehicle.

The computer software program involved in the present application can be stored in the computer-readable storage medium. The computer-readable storage medium may include: any physical device and virtual device that can carry computer program codes, a USB disk, a mobile hard disk, a magnetic disk, an optical disk, a computer memory, a Read-Only Memory (ROM), a Random Access Memory (RAM), electrical carrier signals, telecommunication signals, other software distribution media, and the like.

The above are only the preferred embodiments of the present application and not intended to limit the present application. For those skilled in the art, the present application can have various modifications and variations. Any modifications, equivalent replacements, improvements and the like within the spirit and principle of the present application shall fall within the scope of protection of the present application.

### Industrial Applicability

According to the present application, in an environment where the on-board device and the wireless headset are interconnected, automatic switching from sound acquisition by the on-board device MIC to sound acquisition by the wireless headset MIC may be achieved when the wireless headset is picked up and worn and the wireless headset and the on-board device are interconnected, thereby improving user experiences and increasing market competitiveness of the vehicle which is equipped with the apparatus of the present application or applying the method of the present application.

## Claims

1. An MIC switching apparatus for a vehicle, comprising:
a wireless headset MIC configured to receive sounds;
a connector configured to generate a connection signal when a wireless headset and an on-board device are connected;
an on-board device MIC configured to receive the sounds and capable of being connected to the connector;
a data selector respectively connected to the wireless headset MIC and the connector and configured to selectively receive a sound signal from the wireless headset MIC or the on-board device MIC; and
a connector respectively connected to the connector and the data selector, and configured to, when receiving the connection signal, control the data selector to receive the sound signal from the on-board device MIC, and when not receiving the connection signal, control the data selector to receive the sound signal from the wireless headset MIC.

2. The MIC switching apparatus for the vehicle as claimed in claim 1, wherein the connector comprises at least one PIN; and when the at least one PIN is connected to the on-board device, the connector generates a connection signal.

3. The MIC switching apparatus for the vehicle as claimed in claim 1, further comprising: a range sensor configured to detect a distance between the wireless headset and the on-board device, and send an approach signal to the connector to allow the connector to generate the connection signal when the distance is less than a distance threshold.

4. The MIC switching apparatus for the vehicle as claimed in claim 1, further comprising: an optical sensor configured to detect whether the wireless headset is worn or not, and send a wearing signal to the controller when the wireless headset is worn; and
the controller is further configured to control, when receiving the wearing signal but not receiving the connection signal, the data selector to receive the sound signal from the wireless headset MIC.

5. The MIC switching apparatus for the vehicle as claimed in claim 1, further comprising:
a near-field noise reduction module configured to perform noise reduction on sounds received by the wireless headset MIC; and
a far-field noise reduction module configured to perform far-field noise reduction on sounds received by the on-board device MIC.

6. The MIC switching apparatus for the vehicle as claimed in claim 1, wherein the wireless headset comprises a Bluetooth headset; and the wireless headset MIC, the connector, the data selector, and the controller are arranged in the Bluetooth headset.

7. The MIC switching apparatus for the vehicle as claimed in claim 6, wherein the on-board device comprises: a Bluetooth module configured for Bluetooth communication connection with the Bluetooth headset.

8. The MIC switching apparatus for the vehicle as claimed in claim 1, wherein the on-board device may include a vehicle center console, a vehicle central instrument, a vehicle steering wheel, a vehicle driving computer, and/or a vehicle driving recorder.

9. An MIC switching method for a vehicle, wherein the method can be applied to a wireless headset and/or an on-board device; the wireless headset comprises a wireless headset MIC configured to receive sounds, a connector configured to generate a connection signal when the wireless headset and the on-board device are connected, and a data selector respectively connected to the wireless headset MIC and the connector; the on-board device comprises: an on-board device MIC configured to receive the sounds; and the method comprises:
responding to the connection signal;
when receiving the connection signal, controlling the data selector to receive a sound signal from the on-board device MIC; and
when not receiving the connection signal, controlling the data selector to receive a sound signal from the wireless headset MIC.

10. The MIC switching method for the vehicle as claimed in claim 9, wherein in the step of controlling the data selector to receive the sound signal from the wireless headset MIC, when it is detected that the wireless headset is not worn and the connection signal is not received, the data selector is controlled to receive the sound signal from the wireless headset MIC.

11. The MIC switching method for the vehicle as claimed in claim 9, wherein the method further comprises: before responding to the connection signal, detecting a distance between the wireless headset and the on-board device, and sending an approach signal to the connector to allow the connector to generate the connection signal when the distance is less than a distance threshold.

12. The MIC switching method for the vehicle as claimed in claim 9, wherein
the step of controlling the data selector to receive the sound signal of the on-board device MIC further comprises: performing far-field noise reduction on sounds received by the on-board device MIC; and
the step of controlling the data selector to receive the sound signal of the on-board device MIC further comprises: performing near-field noise reduction on sounds received by the wireless headset MIC.

13. An on-board device, comprising a memory, a processor, and a computer program that is stored on the memory and can run on the processor, wherein when executing the computer programs, the processor implements the MIC switching method for the vehicle according to any one of claims 9 to 12.

14. A vehicle, comprising a shell and a cab in the shell, wherein the on-board device as claimed in claim 13 is arranged in the cab.

15. A computer-readable storage medium, wherein the computer-readable storage medium stores a computer program for performing the MIC switching method for the vehicle according to claim 9.
